**Europäisches Patentamt**

**European Patent Office**

**Office européen des brevets**

(11) Veröffentlichungsnummer: **0 662 534 A1**

(12) **EUROPÄISCHE PATENTANMELDUNG**

(21) Anmeldenummer: **95100050.4**

(22) Anmeldetag: **03.01.95**

(51) Int. Cl.⁶: **D01F 6/80**, D01F 1/04, C08J 5/18, C08K 3/00, C08K 5/00, C08L 77/10

(30) Priorität: **06.01.94 DE 4400248**

(43) Veröffentlichungstag der Anmeldung: **12.07.95 Patentblatt 95/28**

(84) Benannte Vertragsstaaten: **CH DE DK ES FR GB IE IT LI NL PT**

(71) Anmelder: **HOECHST AKTIENGESELLSCHAFT** Brüningstrasse 50 D-65929 Frankfurt am Main (DE)

(72) Erfinder: **Kampschulte, Uwe, Dr.** Hölderlinring 12 D-65795 Hattersheim (DE)
Erfinder: **Klein, Peter, Dr.** Fasanenweg 13 D-65205 Wiesbaden (DE)
Erfinder: **Neuert, Richard, Dr.** Brunnerweg 2 D-90610 Winkelhaid (DE)

(54) **Verfahren zur Herstellung von massegefärbten geformten Gebilden auf der Basis von aromatischen Polyamiden, massegefärbte Fasern, sowie Vormischung zur Herstellung von massegefärbten geformten Gebilden.**

(57) Beschrieben wird ein Verfahren zur Herstellung von massegefärbten Fasern oder Filmen, umfassend die Maßnahmen:

a) Herstellen einer Vormischung durch Vermahlen einer Zusammensetzung enthaltend ein polares aprotisches organisches Lösungsmittel, 5 bis 30 Gew. % eines aromatischen Polyamids und 0,5 bis 5 Gew.% einer farbgebenden Feststoffkomponente, so daß die farbgebende Feststoffkomponente Teilchen eines mittleren Teilchendurchmessers von weniger als 200 nm,

b) Herstellen einer Ausformlösung durch Vermischen der in Schritt a) erzeugten Vormischung mit einer Lösung enthaltend ein polares aprotisches organisches Lösungsmittel und ein aromatisches Polyamid, das dem in Schritt a) eingesetzten aromatischen Polyamid entspricht, kurz vor der Ausformdüse,

c) Extrudieren der Ausformlösung durch eine Ausformdüse, welche Öffnungen in vorgegebener Anzahl und Form enthält, so daß primäre Fasern oder Filme entstehen,

d) Entfernen des polaren aprotischen organischen Lösungsmittels in an sich bekannter Weise, so daß lösungsmittelärmere oder -freie Fasern oder Filme entstehen, die eine für die weitere Verarbeitung ausreichende mechanische Stabilität und Klebfreiheit aufweisen, und

e) gegebenenfalls Verstrecken der erhaltenen Fasern oder Filme in an sich bekannter Weise.

Ferner werden massegefärbte Fasern auf der Basis von aromatischen Polyamiden mit einem Einzelfilamenttiter von mindestens 2,0 dtex beschreiben, die als faserbildende Substanz mindestens ein in polaren aprotischen organischen Lösungsmitteln lösliches aromatisches Polyamid enthalten und 0,5 bis 5 Gew.%, bezogen auf die Faser, mindestens eine farbgebende Feststoffkomponente mit einem mittleren Teilchendurchmesser von weniger als 200 nm. Die Fasern weisen eine glatte Oberfläche auf, charakterisiert durch den Anteil der reflektierten Strahlung bei Messung senkrecht zur Faserachse von mindestens 6 %.

Außerdem wird eine Vormischung zum Massefärben von geformten Gebilden auf der Basis von aromatischen Polyamiden beschrieben. Diese enthält

a) 0,5 bis 5 Gew. % an aromatischem Polyamid,

b) 5 bis 30 Gew.% an farbgebender Feststoffkomponente, deren Teilchen einen mittleren Teilchendurchmesser von von weniger als 200 nm, und

c) 65 bis 94,5 Gew. % an polarem aprotischen organischen Lösungsmittel, das vorzugsweise mit dem in der Ausformlösung eingesetzten polaren aprotischen organischen Lösungsmittel übereinstimmt.

Die vorliegende Erfindung betrifft ein besonderes Verfahren zum Massefärben von Fasern oder Filmen auf der Basis von aromatischen Polyamiden, ausgewählte massegefärbte Fasern mit hoher Festigkeit und hohen Einzelfilamenttitern, sowie Vormischungen, die sich zur Herstellung von massegefärbten geformten Gebilden eignen.

Aromatische Polyamide - auch Aramide genannt - sind bekannte faserbildendene Werkstoffe hoher Chemikalienrestistenz. Aramidfasern zeichnen sich vor allem durch gute mechanische Eigenschaften, wie hohe Festigkeiten und Moduli, aus.

Es ist allgemein bekannt, daß sich geformte Gebilde aus aromatischen Polyamiden schwer oder gar nicht anfärben lassen. Mit den üblichen Färbeverfahren, wie Bad- oder Stückgutfärbungen, lassen sich bei diesen Gebilden nur schwache Anfärbungen erzielen. Es besteht ein Bedarf nach gefärbten Aramidfasern, die eine hohe Farbstärke und Echtheit aufweisen und die gleichzeitig gute mechanische und optische Eigenschaften, wie einen hohen Glanz besitzen.

Es ist ferner bekannt, bei Polymermaterialien, die sich nur unter Schwierigkeiten anfärben lassen, geformte Gebilde mittels der sogenannten Massefärbung herzustellen. Dazu wird die Ausformmasse mit geeigneten Pigmenten oder anderen Farbstoffen versetzt und die Formgebung erfolgt mit der gefärbten Formmasse.

Solche Formverfahren sind auch bereits für Aramide beschrieben worden. So sind aus den EP-A-295,672 und EP-A-356,579 Verfahren zur Herstellung von hochfesten para-Aramidfasern hohen Moduls bekannt, worin eine Spinnlösung enthaltend konzentrierte Schwefelsäure, para-Aramid und ein organisches und schwefelsäurelösliches Pigment zum Einsatz kommen. Die beschriebenen Fasern und deren Herstellungsverfahren sind auf die Verwendung schwefelsäureverarbeitbarer Aramide und organischer Pigmente beschränkt.

Die Massefärbung von aus polaren aprotischen organischen Lösungsmitteln formbaren Aramidgebilden ist bislang noch nicht bekannt geworden.

Es wurde jetzt gefunden, daß sich solche geformte Gebilde, insbesondere Fasern, auf einfache Weise durch Lösungsformen herstellen lassen und daß sich die erhaltenen Fasern durch hohe Festigkeiten auszeichnen.

Das erfindungsgemäßen Verfahren beinhaltet das Zudosieren einer Pigment-Vormischung zur Ausformlösung, die sich bereits in der Ausformanlage befindet. Auf diese Weise wird es möglich, Wechsel der Massefärbung durchzuführen, ohne das zuvor die gesamte Anlage gereinigt werden muß. Das erfindngsgemäßen Verfahren zeichnet sich also durch eine hohe Flexibilität aus.

Die vorliegende Erfindung betrifft ein Verfahren zur Herstellung von massegefärbten geformten Gebilden, wie Fasern oder Folien, umfassend die Maßnahmen:

a) Herstellen einer Vormischung durch Vermahlen einer Zusammensetzung enthaltend ein polares aprotisches organisches Lösungsmittel, 5 bis 30 Gew.% eines aromatischen Polyamids und 0,5 bis 5 Gew.% einer farbgebenden Feststoffkomponente, so daß die farbgebende Feststoffkomponente Teilchen eines mittleren Teilchendurchmessers von weniger als 200 nm, insbesondere von 80 bis 150 nm aufweist,

b) Herstellen einer Ausformlösung durch Vermischen der in Schritt a) erzeugten Vormischung mit einer Lösung enthaltend ein polares aprotisches organisches Lösungsmittel und ein aromatisches Polyamid, das dem in Schritt a) eingesetzten aromatischen Polyamid entspricht, kurz vor der Ausformdüse,

c) Extrudieren der Ausformlösung durch eine Ausformdüse, welche Öffnungen in vorgegebener Anzahl und Form enthält, so daß primäre geformte Gebilde entstehen,

d) Entfernen des polaren aprotischen organischen Lösungsmittels in an sich bekannter Weise, so daß lösungsmittelärmere oder -freie geformte Gebilde entstehen, die eine für die weitere Verarbeitung ausreichende mechanische Stabilität und Klebfreiheit aufweisen, und

e) gegebenenfalls Verstrecken der erhaltenen geformten Gebilde in an sich bekannter Weise.

Der Begriff "Faser" ist im Rahmen dieser Erfindung in seiner breitesten Bedeutung zu verstehen; dazu zählen also zum Beispiel Endlosfasern (Filamente), wie Mono- oder Multifilamente, oder Stapelfasern oder Pulp.

Der Begriff "Film" ist im Rahmen dieser Erfindung ebenfalls in seiner breitesten Bedeutung zu verstehen; dazu zählen also zum Beispiel Ausführungsformen unterschiedlichster Stärke oder Funktion, wie Membranen, Beschichtungen oder insbesondere Folien.

Der Begriff "geformtes Gebilde" ist im Rahmen dieser Erfindung ebenfalls in seiner breitesten Bedeutung zu verstehen. Darunter ist also ein Formkörper zu verstehen, der unter Verwendung der erfindungsgemäßen Vormischung in einem beliebigen Formgebungsprozeß erhältlich ist.

Im erfindungsgemäßen Verfahren können im Prinzip alle Aramide zum Einsatz kommen, die in polaren aprotischen Lösungsmitteln löslich sind.

Unter löslichem aromatischen Polyamid ist im Rahmen dieser Erfindung ein aromatisches Polyamid zu verstehen, daß bei 25 °C eine Löslichkeit in N-Methylpyrrolidon von mindestens 50 g/l aufweist.

Vorzugsweise enthält das polare aprotische organische Lösungsmittel zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen.

Bevorzugt setzt man aromatische Polyamide ein, die in polaren aprotischen organischen Lösungsmitteln unter der Ausbildung isotroper Lösungen löslich sind und die mindestens zwei, insbesondere drei verschiedene sich in den Diamineinheiten unterscheidende wiederkehrende Struktureinheiten aufweisen.

Vorzugsweise handelt es sich bei dem Aramid um ein Polymeres, das die wiederkehrenden Struktureinheiten der Formeln I, II und gegebenenfalls III aufweist

$$-OC-Ar^1-CO-NH-Ar^2-NH- \qquad (I),$$

$$-OC-Ar^1-CO-NH-Ar^3-NH- \qquad (II),$$

$$-OC-Ar^1-CO-NH-Ar^4-NH- \qquad (III),$$

worin $Ar^1$, $Ar^2$, $Ar^3$ und $Ar^4$ unabhängig voneinander einen zweiwertigen ein-oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und $Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, -CH$_2$-, -S-, -CO- oder -SO$_2$- miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

4

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet aromatische Polyamide auf der Basis von unsubstituierten Resten.

Als Dicarbonsäureeinheit in den aromatischen Polyamiden enthaltend die wiederkehrenden Struktureinheiten der Formeln I, II und gegebenenfalls III setzt man vorzugsweise Terephthalsäureeinheiten ein.

Beispiele für bevorzugte Diaminkombinationen, die diesen bevorzugten wiederkehrenden Struktureinheiten der Formeln I, II, und III zugrundeliegen, sind 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether.

Aramide, die sich von solchen Diaminkombinationen ableiten und die sich bevorzugt gemäß der vorliegenden Erfindung einsetzen lassen, sind in den EP-A-199,090, EP-A-364,891, EP-A-364,892, EP-A-364,893 und EP-A-424,860 beschrieben.

Die erfindungsgemäß einzusetzenden aromatischen Polyamide sind an sich bekannt und können mittels an sich bekannter Verfahren hergestellt werden.

Bevorzugt setzt man aromatische Polyamide ein, die die oben definierten wiederkehrenden Struktureinheiten der Formeln I, II und gegebenenfalls III aufweisen, worin $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$$-Ar^5-X-Ar^6- \qquad (IV),$$

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden, X eine Gruppe der Formel -O-, -S-, $-SO_2-$, -O-Phenylen-O- oder Alkylen ist, und worin $Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

Besonders bevorzugte Aramide dieses Typs sind Polymere, worin $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, $-CH_2-$ oder - O-1,4-Phenylen-O- ist und $Ar^4$ einen zweiwertigen Rest des 3,4-Diaminodiphenylethers, 3,3'-Dichlorbenzidins, des 3,3'-Dimethylbenzidins oder des 3,3'-Dimethoxybenzidins darstellt.

Die Copolykondensation erfindungsgemäß zu verformender aromatischer Polyamide wird im allgemeinen als Lösungspolykondensation in an sich bekannter Weise ausgeführt.

Bei einer bevorzugten Form der Durchführung der Lösungspolykondensation werden die aromatischen monomeren Diamine in einem Amid-Lösungsmittel gelöst. Die so erhaltene Lösung wird dann mit der mindestens einen aromatischen monomeren Verbindung in Form eines aromatischen Dicarbonsäuredihalogenids unter heftigem Umrühren gemischt, um die Polykondensation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Polykondensationsmischung vor, während oder nach der Polykondensation zugesetzt wird.

Beispiele für solche Zusatzstoffe sind Alkalimetallhalogenide, wie Lithiumchlorid, oder Erdalkalimetallhalogenide, wie Calciumchlorid.

Die Polykondensationstemperaturen liegen bei der Lösungspolymerisation üblicherweise zwischen -20°C und + 120°C, bevorzugt zwischen + 10°C und + 100°C. Besonders gute Ergebnisse werden bei Reaktionstemperaturen zwischen + 10°C und + 80°C erzielt.

Die Summe der Konzentrationen der aromatischen monomeren Verbindungen in der Polykondensationsgemischlösung kann unter Beachtung des gewünschten Polykondensationsgrades, der gewünschten Viskosität des Polykondensationsgemisches, der Art der verwendeten aromatischen monomeren Verbindungen, der Art des verwendeten Lösungsmittels und der gewünschten Polykondensationstemperatur eingestellt werden. Die günstigste Summe der Konzentrationen kann dabei aufgrund einer Reihe von Vorversuchen für den Ablauf der Polykondensation ermittelt werden.

Polykondensationsreaktionen werden vorzugsweise so ausgeführt, daß nach Abschluß der Reaktion 2 bis 15, vorzugsweise 3 bis 12 Gew.-% an Polykondensat in der Lösung vorliegen. Besonders gute Ergebnisse werden bei Konzentrationen von 4 bis 6 Gew.-% erzielt.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von mehr als 3,0 dl/g, vorzugsweise mehr als 5,0 dl/g, insbesondere 4,5 bis 8,0 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung an Lösungen von jeweils 0,25 % Polymer in N-Methylpyrrolidon bei 25°C bestimmt.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Anschließend kann der entstandene und salzartig an das Amidlösungsmittel gebundene Chlorwasserstoff durch Zugabe basischer Substanzen neutralisiert werden.

Geeignet sind dafür beispielsweise Lithiumhydroxyd, Calciumhydroxyd, insbesondere aber Calciumoxid.

Das bei Durchführung des Herstellungsverfahrens erhaltene aromatische Polyamid kann aus dem Polykondensationsgemisch durch ein Trennverfahren abgeschieden werden, beispielsweise durch Präzipitation. Zur Herstellung einer Lösung für das Ausformen des Copolyamids wird das so gewonnene aromatische Polyamid dann in einem geeigneten polaren aprotischen organischen Lösungsmittel gelöst.

In den Fällen, in denen zur Herstellung des aromatischen Polyamids das Verfahren der Lösungspolykondensation angewandt wird, bleibt das Polyamid, weil es in dem Lösungsmittel für die Polykondensation hervorragend löslich ist, in diesem vollständig gelöst. Daher ist es bei industriellem Einsatz des Herstellungsverfahrens vorteilhaft, daß bei der Polykondensation erhaltene Gemisch direkt zur Herstellung der Ausformlösung für das aromatische Polyamid zu verwenden.

Bei dem Verfahren zum Herstellen der Ausformlösung des aromatischen Polyamids wird als Lösungsmittel vorzugsweise ein Lösungsmittel vom Amidtyp verwendet, insbesondere die weiter obengenannten Lösungsmittel vom Amidtyp, bzw. eine Mischung von zwei oder mehr der genannten Verbindungen.

Von der so hergestellten Lösung wird ein Teil abgezweigt und zur Herstellung der Vormischung verwendet. Zu diesem Zweck wird die Lösung enthaltend ein polares aprotisches organisches Lösungsmittel und 5 bis 30 Gew. % des aromatischen Polyamids mit 0,5 bis 5 Gew.% einer farbgebenden Feststoffkomponente oder einem Gemisch von farbgebenden Feststoffkomponenten versehen und so lange vermahlen, bis die Teilchen der farbgebenden Feststoffkomponente(n) einen mittleren Teilchendurchmesser von weniger als 200 nm, vorzugsweise von 80 bis 150 nm, aufweisen.

Die Mengenangaben der einzelnen Bestandteile der Vormischung beziehen sich dabei jeweils auf die Gesamtmenge der Vormischung.

Die in der Vormischung erhaltenen farbgebenden Feststoffkomponente(n) zeichnen sich durch einen geringen Gehalt an Teilchen höherer Durchmesser aus. Im Falle von Ruß beträgt der Anteil von Teilchen mit Durchmessern von größer als 200 nm weniger als 20 Gew.%, bezogen auf die Gesamtmenge der Teilchen.

Eine weitere Größe zur Charakterisierung der in der erfindungsgemäßen Vormischung enthaltenen farbgebenden Feststoffkomponente(n) ist der sogenannte D50-Wert. Dabei handelt es sich um eine Summation der Ergebnisse der Messung einer Korngrößenverteilung. Die Mengen der einzelnen Korngrößenfraktionen werden dabei, ausgehend von den kleinsten vorhandenen Teilchendurchmessern, aufsummiert. Der D50-Wert entspricht dabei dem Teilchendurchmesser, den die Fraktion in der 50 Gew.% Summe mit der dem größten Teilchendurchmesser aufweist.

Für Ruß belaufen sich die D50-Werte in der erfindungsgemäßen Vormischung üblicherweise auf weniger als 100 nm. Für Buntpigmente werden im allgemeinen höhere D50-Werte erreicht.

Das Vermahlen kann mit beliebigen Aggregaten erfolgen, solange damit die oben definierten Teilchendurchmesser erzielt werden können. Vorzugsweise werden Perl- oder Kugelmühlen eingesetzt.

Die Mahldauer kann von unterschiedlichen Faktoren abhängen, beispielsweise von der Art der Mühle und der Feststoffkomponente, und beträgt vorzugsweise 2 bis 8 Stunden.

Das Vermahlen in Gegenwart von aromatischen Polyamiden bewirkt eine Stabilisierung der frisch gemahlenen Pigmentteilchen gegen Re-Agglomeration, läßt das Einstellen einer gewünschten Rheologie der Pigment-Paste zu und bewirkt eine verlängerte Lagerzeit und/oder Standzeit der Pigment-Dispersion.

Nach dem Vermahlen kann die Vormischung entweder direkt zur Herstellung der Ausformlösung eingesetzt werden. Vorzugsweise wird die Vormischung vor dem weiteren Einsatz filtriert, um eventuell noch vorhandene Grobteilchen der Feststoffkomponente und/oder Gelteilchen des aromatischen Polyamids zu entfernen.

Die Filtration wird vorzugsweise durch Passieren der vermahlenen Vormischung über Stahlfilterbleche, insbesondere solche mit einer Porengröße von 5 bis 10 $\mu$m, durchgeführt.

Als farbgebende Feststoffkomponente lassen sich beliebige Schwarz- oder Buntpigmente einsetzen, sofern diese unter den Herstellungsbedingungen der geformten Gebilde beständig sind. Auswahlkriterien für die erfindungsgemäß einzusetzenden Pigmente sind beispielsweise Temperatur- und Lösungsmittelbeständigkeit, sowie Beständigkeit in Umgebungen mit hohen Scherkräften (wie sie beispielsweise beim Durchtritt der Lösungen durch Spinndüsen auftreten). Es lassen sich auch Pigmentmischungen einsetzen.

Beispiele für bevorzugte Feststoffkomponenten sind Pigmente der Echtrot-, Echtblau- oder Echtgelbtypen, besonders bevorzugt jedoch Ruß, insbesondere die Rußtype [R]PRINTEX-U der Firma Degussa.

Beispiele für erfindungsgemäß einsetzbare Pigmentklassen sind Phthalocyanine, Farbstoffe mit Perylengrundkörpern oder Farbstoffe mit Diazogrundkörpern.

Die auf dieser Weise hergestellte Vormischung wird zur Herstellung einer Ausformlösung für die Herstellung der Filme oder Fasern eingesetzt.

Zu diesem Zweck werden ein Teil der Ausgangslösung enthaltend ein polares aprotisches organisches Lösungsmittel und das aromatische Polyamid mit der Vormischung unmittelbar vor der Ausformdüse kombiniert.

Dies erfolgt vorzugsweise durch Zudosierung beider Ströme von Ausgangslösung bzw. Vormischung über einen statischen Mischer, der der Ausformdüse unmittelbar vorgeschaltet ist.

Es können selbstverständlich auch andere Mischer verwendet werden, die in einem kontinuierlich arbeitenden Fließsystem einsetzbar sind.

Für die Herstellung der Ausformlösung ist es vorteilhaft, wenn die Konzentration des aromatischen Polyamids in einem Bereich zwischen 3 und 12 Gew.-%, insbesondere zwischen 4 und 6 Gew.-% gehalten wird. Durch eine entsprechende Wahl der Polymerkonzentrationen in der Vormischung und in der Ausgangslösung lassen sich die gewünschten Konzentrationen einstellen.

Wenn es erforderlich ist, kann die Ausformlösung einen Zusatzstoff zur Förderung der Löslichkeit enthalten, wobei mindestens ein Metallhalogenid eines Metalls der Gruppen I und II des Periodensystems verwendet werden kann, beispielsweise Lithiumchlorid, Calciumchlorid oder Magnesiumbromid, und zwar in einer Konzentration zwischen 0,2 und 10 %, vorzugsweise zwischen 0,5 und 5 %, bezogen auf das Gesamtgewicht der Ausformlösung. Der Zusatzstoff zur Förderung der Löslichkeit fördert dabei auch die Stabilität der Ausformlösung bei erhöhter Temperatur. Der Zusatzstoff kann über die Vormischung und/oder über die Ausgangslösung der Ausformlösung zugesetzt werden.

Die Formgebung der Ausformlösung, vorzugsweise das Verspinnen einer Spinnlösung, nach dem erfindungsgemäßen Verfahren kann nach jedem geeigneten Trockenverfahren, Naßverfahren oder Trocken-Naßverfahren erfolgen. In den Fällen, in denen ein Naßverfahren angewandt wird, wird die Ausformlösung durch eine Ausformdüse in eine koagulierende Flüssigkeit extrudiert. Dabei ist es gewöhnlich vorteilhaft, wenn die Koagulationsflüssigkeit aus Wasser oder aus einer wäßrigen, ein polares aprotisches organisches Lösungsmittel enthaltenden Lösung besteht. Dabei kann das polare aprotische organische Lösungsmittel unter denselben Amid-Lösungsmitteln ausgewählt werden, die gewöhnlich für das Lösen des aromatischen Polyamids verwendet werden.

Als polares aprotisches organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise bei einer Temperatur zwischen 0°C und der Siedetemperatur der Koagulationsflüssigkeit bei Atmosphärendruck eingesetzt.

Das polare aprotische organische Lösungsmittel liegt in der Koagulationsflüssigkeit vorzugsweise in einer Konzentration zwischen 70 Gew.-% und weniger vor, insbesondere weniger als 50 Gew.-%.

Bei der Herstellung von Filmen oder Fasern aus dem aromatischen Polyamid wird die Ausformlösung durch einen Düsenkopf mit einer oder mehreren Ausformöffnungen extrudiert, wobei die filament- oder filmförmigen Ströme der Ausformlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z.B. in der US-A-3,414,645 beschrieben ist.

Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt.

Die Größe der Düsenbohrungen der Spinndüse ist dabei so zu wählen, daß sich ein Film mit dem gewünschten Flächengewicht bzw. ein Filament des gewünschten Titers ergibt.

Üblicherweise setzt man Spinndüsen mit Düsenlochdurchmessern von 0,05 bis 1,0 mm ein. Diese Spinndüsen können einzelne Düsenlöcher (Herstellung von Monofilamenten) oder auch mehrere Düsenlöcher (Herstellung von Multifilamenten) aufweisen.

Bei Schritt d) kann es sich um ein Verdampfen des Lösungsmittels unter Anwendung erhöhter Temperatur handeln, so daß ein lösungsmittelärmeres geformtes Gebilde entsteht, das eine für die weitere Verarbeitung ausreichende mechanische Stabilität und Klebfreiheit aufweist (Trockenformverfahren).

Vorzugsweise handelt es sich bei Schritt d) um ein Einbringen des primären geformten Gebildes in ein Bad enthaltend eine Koagulationsflüssigkeit, so daß das organische Lösungsmittel aus besagtem primärem geformten Gebilde entfernt wird und das gewünschte geformte Gebilde durch Koagulation des Primärgebildes entsteht, das eine für die weitere Verarbeitung ausreichende mechanische Stabilität aufweist (Naßformverfahren).

Das Einbringen kann durch direktes Extrudieren in eine Koagulationsflüssigkeit erfolgen oder durch das Extrudieren in eine Koagulationsflüssigkeit nach Durchlaufen eines Luftspaltes vorbestimmter Länge.

Beim Naßformen eines aromatischen Polyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filme oder Filamente des aromatischen Polyamids in ein Wasserbad eingeleitet werden, welches auf einer Temperatur zwischen 0 und 100°C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filmen oder Filamenten ausgewaschen.

Aus der vorstehenden Beschreibung wird deutlich, daß das erfindungsgemäße Verfahren unter Verwendung üblicher Ausformvorrichtungen durchgeführt werden kann, ohne daß ein gefährliches oder schädliches Lösungsmittel, wie z.B. konzentrierte Schwefelsäure, verwendet werden müßte. Hierdurch werden die Gefahren für das Bedienungspersonal verringert.

Die erfindungsgemäß hergestellten Filme oder Filamente werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Fasern.

Filamente werden in der Regel verstreckt, um eine hohe mechanische Festigkeit und einen hohen Elastizitätsmodul zu erzielen. Das Verstreckungsverhältnis beträgt dabei üblicherweise etwa 1:6 bis 1:20.

EP 0 662 534 A1

Die Verstrecktemperatur liegt dabei in der Regel zwischen 250 und 500°C, vorzugsweise zwischen 300 und 480°C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern.

Im erfindungsgemäßen Verfahren kann eine an sich übliche Verstreckpräparation zur Anwendung kommen.

Insbesondere die nach dem erfindungsgemäßen Verfahren erhältlichen Fasern zeichnen sich durch ausgezeichnete mechanische Eigenschaften, wie hohe Reißfestigkeiten und Anfangsmoduli und niedrige Reißdehnungen, sowie durch einen hohen Glanz aus. Ferner lassen sich auf einfache Art und Weise relativ grobtitrige Fasern herstellen.

Überraschenderweise ändern sich infolge des Zusatzes der farbgebenden Feststoffkomponente die mechanischen Eigenschaften der fertigen Fasern, verglichen mit den nicht gefärbten Fasern, nur wenig.

Die Erfindung betrifft auch die massegefärbten Fasern auf der Basis von aromatischen Polyamiden, insbesondere Fasern mit einem Einzelfilamenttiter von mindestens 1,0 dtex, enthaltend als faserbildende Substanz mindestens ein in polaren aprotischen organischen Lösungsmitteln lösliches aromatisches Polyamid und 0,5 bis 5 Gew.%, bezogen auf die Faser, mindestens eine farbgebende Feststoffkomponente mit einem mittleren Teilchendurchmesser von weniger als 200 nm, insbesondere 80 bis 150 nm, welche Fasern eine glatte Oberfläche aufweisen, charakterisiert durch den Anteil der reflektierten Strahlung bei Messung parallel zur Faserachse von mindestens 6,0 %, vorzugsweise von 7 bis 10 %.

Die Messung des Anteils der reflektierten Strahlung erfolgt dabei unter Verwendung eines Goniophotometers, wie in Textil-Praxis, 1966, (7), S. 512-516 beschrieben.

Die erfindungsgemäßen Fasern weisen vorzugsweise Einzelfilamenttiter von 1 bis 50 dtex, insbesondere von 1 bis 30 dtex, auf.

Die Zugfestigkeit der erfindungsgemäßen Fasern beträgt vorzugsweise 130 bis 260 cN/tex, insbesondere 160 bis 200 cN/tex.

Ganz besonders bevorzugt werden massegefärbte Fasern, wie oben definiert, deren Zugfestigkeit mehr als 160 cN/tex und deren Reißdehnung 3 bis 5 % beträgt.

Der Anfangsmodul, bezogen auf 100 % Dehnung, der erfindungsgemäßen massegefärbten Fasern beträgt vorzugsweise 30 bis 80 N/tex.

Die Querschnittsform der Einzelfilamente der erfindungsgemäßen Fasern kann beliebig sein, beispielsweise dreieckig, tri- oder multilobal oder insbesondere elliptisch oder rund.

Die erfindungsgemäßen Fasern, welche hervorragende mechanische und thermische Eigenschaften besitzen und sich durch eine hohe Verstreckbarkeit auszeichnen, können auf die verschiedenste Weise industriell eingesetzt werden, beispielsweise als Verstärkungsmaterialien, beispielsweise für die Verstärkung von Autoreifen und anderen Gummiartikeln und insbesondere für die Verstärkung von hydraulisch abbindenden Materialien, als wärmebeständige Isolationsmaterialien, zur Herstellung von Filtergeweben und als Dämmstoffe.

Die Erfindung betrifft ferner eine Vormischung zum Massefärben von geformten Gebilden auf der Basis von aromatischen Polyamiden enthaltend

a) 0,5 bis 5 Gew. % an aromatischem Polyamid,

b) 5 bis 30 Gew. % an farbgebender Feststoffkomponente, deren Teilchen einen mittleren Teilchendurchmesser von weniger als 200 nm, insbesondere 80 bis 150 nm aufweisen, und

c) 65 bis 94,5 Gew. % an polarem aprotischen organischen Lösungsmittel, das vorzugsweise mit dem in der Ausformlösung eingesetzten polaren aprotischen organischen Lösungsmittel übereinstimmt.

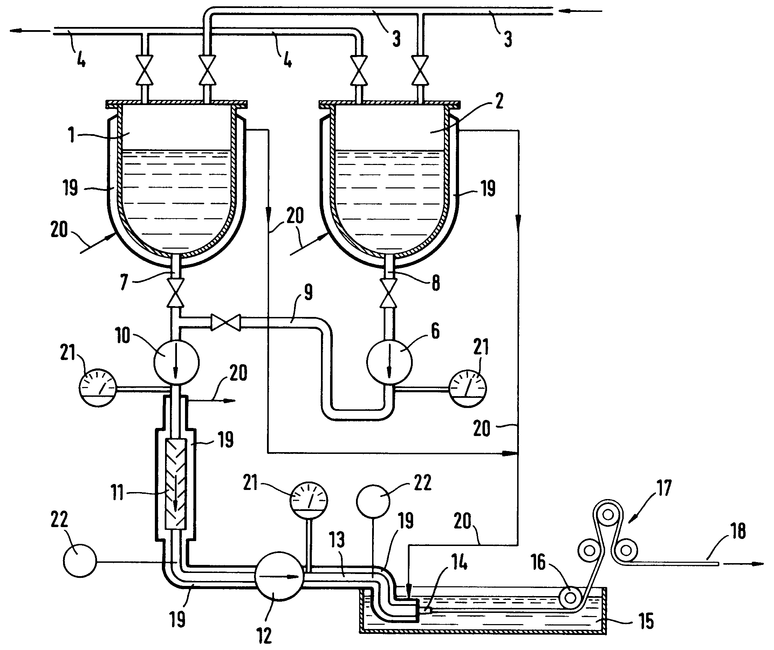

Weitere Eigenschaften und Vorteile der Erfindung werden nachstehend anhand der Figur noch näher erläutert.

In der Figur ist ein Teil eine Vorrichtung zur Durchführung des erfindungsgemäßen Verfahrens dargestellt.

In einem Vorratsbehälter (1) wird eine Vorlösung bestehend aus N-Methylpyrrolidon und aromatischem Polyamid vorgelegt. In einem weiteren Vorratsbehälter (2) wird eine Vormischung bestehend aus N-Methylpyrrolidon, aromatischem Polyamid und Ruß vorgelegt. Die im Vorratsbehälter (2) gelagerte Vormischung wird zuvor in einer nicht dargestellten Perl- oder Kugelmühle vermahlen und anschließend über ein Stahlfilterblech filtriert, so daß der mittlere Durchmesser der Rußteilchen 80 bis 150 nm beträgt.

Die Bestimmung des mittleren Teilchendurchmessers erfolgt nach folgendem Verfahren:

Die Dispersion wird auf eine Meßkonzentration von 0,1 % verdünnt, indem diese mit einer Pasteurpipette unter Rühren in N-Methylpyrrolidon zugesetzt wird. Danach wird noch 20 Minuten in einer Ultraschallschwingwanne beschallt.

Die Messung erfolgt mit einer Photozentrifuge des Typs Shimadzu SA-CP2 nach dem Suspensionsverfahren. Hierzu wird die oben beschriebene Suspension bis zu einer festgelegten Höhe in die Meßküvette eingefüllt und bei einer Drehzahl von 3000 U/min sedimentiert. Die Detektion des Sedimentationsvorganges erfolgt durch Messung der Extinktion mit Weißlicht in Abhängigkeit von der Sedimentationszeit.

Als mittlerer Teilchendurchmesser wird der D50-Wert angesehen.

In beiden Vorratsbehältern (1) und (2) befindet sich eine Schutzgasatmosphäre. Die Versorgung der Vorratsbehälter (1) und (2) erfolgt über die Zuleitung (3) und die Ableitung (4).

Die Vorlösung aus dem Vorratsbehälter (1) wird über eine Ableitung (7) entnommen und der Förderpumpe (10) zugeführt. Die Vormischung aus dem Vorratsbehälter (2) wird über eine Ableitung (8) entnommen und der Förderpumpe (6) zugeführt. Die Pumpleitung (9) der Förderpumpe (6) mündet vor der Förderpumpe (10) in die Ableitung (7).

Die kombinierten Ströme der Vorlösung und der Vormischung werden mittels der Förderpumpe (10) einem statischen Mischer (11) zugeführt, der direkt in die Spinnpumpe (12) mündet. Von dort wird die Spinnlösung über die Leitung (13) durch die Spinndüse (14) in das Koagulationsbad (15) gepreßt und das entstandene primäre Filamtent über die Abzugsgalette (16) abgeführt. Anschließend wird das erhaltene primäre Filament kontinuierlich einem Walzentrio (17) zugeführt, von wo aus die Einführung in die (nicht dargestellte) Nachbehandlungsstrecke (18) erfolgt.

Die Vorratsbehälter (1) und (2), sowie der Mischer (11) und die Leitung (13) sind jeweils mit einem Doppelmantel (19) ausgestattet, wodurch eine Temperierung der darin enthaltenen Lösungen erfolgen kann. Vorzugsweise sind die Doppelmäntel (19) miteinander verbunden, so daß an diesen Stellen jeweils gleiche Temperaturen vorliegen. Dies ist in der Abbildung durch die Leitung (20) dargestellt.

Die Förderpumpen sind vorzugsweise jeweils mit einem Manometer (21) ausgestattet. Ferner wird in den Förderleitungen nach dem statischen Mischer (11) der Druck der Spinnlösung vorzugsweise mittels Drucksensoren (22) überwacht.

In der skizzierten Vorrichtung wurden aromatische Polyamide folgender Zusammensetzung mit Ruß als Pigment zu massegefärbten Filamenten versponnen:

Beispiele 1-8:

Es wurde ein Polyamid I mit folgender Zusammensetzung eingesetzt: Aromatisches Polyamid auf der Basis von Terephthalsäuredichlorid, 25 Mol-% para-Phenylendiamin, 50 Mol-% 3,3'-Dimethylbenzidin und 25 Mol-% 1,4-Bis-(4-aminophenoxy)-benzol

Der Rußanteil im Filament betrug 1,5 Gew.%, bezogen auf die Fadentrockenmasse; es wurde ein Ruß der Type [R]PRINTEX-U der Firma Degussa eingesetzt.

Die erhaltenen Filamente wurden in einer konventionellen Nachbehandlungsstraße gewaschen, getrocknet, verstreckt und aufgespult.

Es Filamente mit den folgende Eigenschaften erhalten:

| Beispiel | 1 | 2 | 3 | 4 | 5 |
|---|---|---|---|---|---|
| Polyamid-Type | I | I | I | I | I |
| Verstreckgrad 1: | 11,2 | 7,8 | 7,1 | 5,9 | 5,4 |
| Multifilament titer (dtex) | 220 | 220 | 220 | 440 | 440 |
| Zugfestigkeit (cN/tex) | 206 | 172 | 158 | 181 | 163 |
| Anfangsmodul (N/tex) | 61 | 56 | 56 | 58 | 57 |
| Reißdehnung (%) | 3,7 | 3,3 | 3,1 | 3,4 | 3,1 |

| Beispiel | 6 | 7 | 8 | 9 |
|---|---|---|---|---|
| Polyamid-Type | I | I | I | I |
| Verstreckgrad 1: | 10,4 | 10,3 | 10,2 | 10,2 |
| Multifilamenttiter (dtex) | 840 | 440 | 440 | 440 |
| Zugfestigkeit (cN/tex) | 191 | 198 | 204 | 190 |
| Anfangsmodul (N/tex) | 62 | 62 | 60 | 60 |
| Reißdehnung (%) | 3,2 | 3,3 | 3,7 | 3,5 |
| Reflexionsmessung (%)[1] | - | - | 6,0 | 7,5 |

[1] Ermittelt durch Messung des Anteils der reflektierten Strahlung parallel zur Faserachse unter Verwendung eines Goniophotometers, wie in Textil-Praxis, 1966, (7), S. 512-516 beschrieben.

Beispiel 9:

Anstelle des Polyamids I wurden Spinnversuche mit einem Polyamid II der folgenden Zusammensetzung wiederholt: Aromatisches Polyamid auf der Basis von Terephthalsäuredichlorid, 50 Mol-% para-Phenylendiamin, 35 Mol-% 3,4'-Diaminodiphenylether und 15 Mol-% 1,4-Bis-(4-aminophenoxy)-benzol
Der Rußanteil im Filament betrug 3 bis 3,5 Gew.%, bezogen auf die Fadentrockenmasse; es wurde ein Ruß der Type [R]PRINTEX-U der Firma Degussa eingesetzt.

Die erhaltenen Filamente wurden in einer konventionellen Nachbehandlungsstraße gewaschen, getrocknet, verstreckt und aufgespult.

Es Filamente mit den folgende Eigenschaften erhalten:

| Beispiel | 9 |
|---|---|
| Polyamid-Type | II |
| Verstreckgrad 1: | 10 |
| Zugfestigkeit (cN/tex) | 215 |
| Anfangsmodul (N/tex) | 48 |
| Reißdehnung (%) | 4 |

**Patentansprüche**

1. Verfahren zur Herstellung von massegefärbten Fasern oder Filmen, umfassend die Maßnahmen:

a) Herstellen einer Vormischung durch Vermahlen einer Zusammensetzung enthaltend ein polares aprotisches organisches Lösungsmittel, 5 bis 30 Gew. % eines aromatischen Polyamids und 0,5 bis 5 Gew.% einer farbgebenden Feststoffkomponente, so daß die farbgebende Feststoffkomponente Teilchen eines mittleren Teilchendurchmessers von weniger als 200 nm, insbesondere von 80 bis 150 nm aufweist,

b) Herstellen einer Ausformlösung durch Vermischen der in Schritt a) erzeugten Vormischung mit einer Lösung enthaltend ein polares aprotisches organisches Lösungsmittel und ein aromatisches Polyamid, das dem in Schritt a) eingesetzten aromatischen Polyamid entspricht, kurz vor der Ausformdüse,

c) Extrudieren der Ausformlösung durch eine Ausformdüse, welche Öffnungen in vorgegebener Anzahl und Form enthält, so daß primäre Fasern oder Filme entstehen,

d) Entfernen des polaren aprotischen organischen Lösungsmittels in an sich bekannter Weise, so daß lösungsmittelärmere oder -freie Fasern oder Filme entstehen, die eine für die weitere Verarbeitung ausreichende mechanische Stabilität und Klebfreiheit aufweisen, und

e) gegebenenfalls Verstrecken der erhaltenen Fasern oder Filme in an sich bekannter Weise.

2. Verfahren nach Anspruch 1, dadurch gekennzeichnet, daß das Herstellen der Vormischung durch Vermahlen mittels einer Perl- oder Kugelmühle erfolgt.

EP 0 662 534 A1

3. Verfahren nach Anspruch 2, dadurch gekennzeichnet, daß das Herstellen der Vormischung durch zwei- bis achtstündiges Vermahlen erfolgt.

4. Verfahren nach Anspruch 1, dadurch gekennzeichnet, daß es sich bei dem in Schritten a) und b) eingesetzten polaren aprotischen organischen Lösungsmittel um N-Methyl-Pyrrolidon handelt.

5. Verfahren nach Anspruch 1, dadurch gekennzeichnet, daß es sich bei dem in Schritten a) und b) eingesetzten aromatischen Polyamid um ein Polymeres handelt, das die wiederkehrenden Struktureinheiten der Formeln I, II und gegebenenfalls III aufweist

$-OC-Ar^1-CO-NH-Ar^2-NH-$ (I),

$-OC-Ar^1-CO-NH-Ar^3-NH-$ (II),

$-OC-Ar^1-CO-NH-Ar^4-NH-$ (III),

worin $Ar^1$, $Ar^2$, $Ar^3$ und $Ar^4$ unabhängig voneinander einen zweiwertigen ein-oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
$Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

6. Verfahren nach Anspruch 5, dadurch gekennzeichnet, daß $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden,
$Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$-Ar^5-X-Ar^6-$ (IV),

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein-oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, $-SO_2-$, -O-Phenylen-O- oder Alkylen ist, und worin
$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

7. Verfahren nach Anspruch 6, dadurch gekennzeichnet, daß $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X - O-, $-CH_2-$ oder -O-1,4-Phenylen-O- ist und $Ar^4$ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

8. Verfahren nach Anspruch 1, dadurch gekennzeichnet, daß es sich bei der in Schritt a) eingesetzten farbgebenden Feststoffkomponente um Ruß handelt.

9. Verfahren nach Anspruch 1, dadurch gekennzeichnet, daß das Vermischen nach Schritt b) in einem statischen Mischer erfolgt, der der Förderpumpe für die Ausformdüse direkt vorgeschaltet ist.

10. Verfahren nach Anspruch 1, dadurch gekennzeichnet, daß in Schitt d) die in Schritt c) geformte primäre Faser oder Film in ein Bad enthaltend eine Koagulationsflüssigkeit eingebracht wird, so daß das organische Lösungsmittel aus besagter primärer Faser oder Film entfernt wird und die gewünschte Faser oder Film durch Koagulation des Primärgebildes entsteht, das eine für die weitere Verarbeitung ausreichende mechanische Stabilität aufweist.

**11.** Massegefärbte Fasern auf der Basis von aromatischen Polyamiden, insbesondere mit einem Einzelfilamenttiter von mindestens 2,0 dtex, enthaltend als faserbildende Substanz mindestens ein in polaren aprotischen organischen Lösungsmitteln lösliches aromatisches Polyamid und 0,5 bis 5 Gew.%, bezogen auf die Faser, mindestens eine farbgebende Feststoffkomponente mit einem mittleren Teilchendurchmesser von weniger als 200 nm, insbesondere von 80 bis 150 nm, welche Fasern eine glatte Oberfläche aufweisen, charakterisiert durch den Anteil der reflektierten Strahlung bei Messung parallel zur Faserachse von mindestens 6 %, vorzugsweise von 7 bis 10 %.

**12.** Massegefärbte Fasern nach Anspruch 11, dadurch gekennzeichnet, daß deren Einzelfilamenttiter 1 bis 50 dtex, vorzugsweise 8 bis 30 dtex, beträgt.

**13.** Massegefärbte Fasern nach Anspruch 11, dadurch gekennzeichnet, daß deren Zugfestigkeit 130 bis 260 cN/tex, vorzugsweise 160 bis 200 cN/tex, beträgt.

**14.** Massegefärbte Fasern nach Anspruch 11, dadurch gekennzeichnet, daß deren Zugfestigkeit mehr als 160 cN/tex und deren Reißdehnung 3 bis 5 % beträgt.

**15.** Massegefärbte Fasern nach Anspruch 11, dadurch gekennzeichnet, daß deren Anfangsmodul, bezogen auf 100 % Dehnung, 30 bis 80 N/tex beträgt.

**16.** Massegefärbte Fasern nach Anspruch 11, dadurch gekennzeichnet, daß es sich bei dem aromatischen Polyamid um ein Polymeres handelt, das die wiederkehrenden Struktureinheiten der Formeln I, II und gegebenenfalls III aufweist

$$-OC-Ar^1-CO-NH-Ar^2-NH- \quad (I),$$

$$-OC-Ar^1-CO-NH-Ar^3-NH- \quad (II),$$

$$-OC-Ar^1-CO-NH-Ar^4-NH- \quad (III),$$

worin $Ar^1$, $Ar^2$, $Ar^3$ und $Ar^4$ unabhängig voneinander einen zweiwertigen ein-oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
$Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

**17.** Massegefärbte Fasern nach Anspruch 16, dadurch gekennzeichnet, daß $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

$$-Ar^5-X-Ar^6- \quad (IV),$$

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein-oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, $-SO_2-$, -O-Phenylen-O- oder Alkylen ist, und worin
$Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

**18.** Massegefärbte Fasern nach Anspruch 17, dadurch gekennzeichnet, daß $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, -CH$_2$- oder -O-1,4-Phenylen-O- ist und $Ar^4$ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

**19.** Massegefärbte Fasern nach Anspruch 11, dadurch gekennzeichnet, daß es sich bei der farbgebenden Feststoffkomponente um Ruß handelt.

**20.** Vormischung zum Massefärben von geformten Gebilden auf der Basis von aromatischen Polyamiden enthaltend
a) 0,5 bis 5 Gew. % an aromatischem Polyamid,
b) 5 bis 30 Gew. % an farbgebender Feststoffkomponente, deren Teilchen einen mittleren Teilchendurchmesser von weniger als 200 nm, insbesondere von 80 bis 150 nm, aufweisen, und
c) 65 bis 94,5 Gew. % an polarem aprotischen organischen Lösungsmittel, das vorzugsweise mit dem in der Ausformlösung eingesetzten polaren aprotischen organischen Lösungsmittel übereinstimmt.

**21.** Vormischung nach Anspruch 20, dadurch gekennzeichnet, daß es sich bei dem polaren aprotischen organischen Lösungsmittel um N-Methyl-Pyrrolidon handelt.

**22.** Vormischung nach Anspruch 20, dadurch gekennzeichnet, daß es sich bei dem aromatischen Polyamid um ein Polymeres handelt, das die wiederkehrenden Struktureinheiten der Formeln I, II und gegebenenfalls III aufweist

-OC-$Ar^1$-CO-NH-$Ar^2$-NH-    (I),

-OC-$Ar^1$-CO-NH-$Ar^3$-NH-    (II),

-OC-$Ar^1$-CO-NH-$Ar^4$-NH-    (III),

worin $Ar^1$, $Ar^2$, $Ar^3$ und $Ar^4$ unabhängig voneinander einen zweiwertigen ein-oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
$Ar^2$, $Ar^3$ und gegbenenfalls $Ar^4$ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

**23.** Vormischung nach Anspruch 22, dadurch gekennzeichnet, daß $Ar^1$ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, $Ar^2$ einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, $Ar^3$ einen Rest der Formel IV darstellt

-$Ar^5$-X-$Ar^6$-    (IV),

worin $Ar^5$ und $Ar^6$ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen ein-oder mehrkernigen aromatischen Rest darstellt, dessen freie Valenzen sich in meta-Stellung oder in einer zu dieser Stellung vergleichbaren gewinkelten Stellung zueinander befinden, X eine Gruppe der Formel -O-, -S-, -SO$_2$-, -O-Phenylen-O- oder Alkylen ist, und worin $Ar^4$ eine der für $Ar^2$ oder $Ar^3$ definierten Bedeutungen annimmt aber von dem jeweils gewählten Rest $Ar^2$ oder $Ar^3$ eines Moleküls abweicht.

14

24. Vormischung nach Anspruch 23, dadurch gekennzeichnet, daß $Ar^1$ 1,4-Phenylen ist, $Ar^2$ 1,4-Phenylen oder ein zweiwertiger Rest des 4,4'-Diaminobenzanilids ist, $Ar^5$ und $Ar^6$ 1,4-Phenylen darstellen, X -O-, -$CH_2$- oder -O-1,4-Phenylen-O- ist und $Ar^4$ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

25. Vormischung nach Anspruch 20, dadurch gekennzeichnet, daß es sich bei der farbgebenden Feststoffkomponente um Ruß handelt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Section Ch, Week 8928<br>Derwent Publications Ltd., London, GB;<br>Class A23, AN 89-202166<br>& JP-A-01 139 814 ( KURARAY KK) , 1.Juni 1989<br>* Zusammenfassung *<br>--- | | D01F6/80<br>D01F1/04<br>C08J5/18<br>C08K3/00<br>C08K5/00<br>C08L77/10 |
| A | DATABASE WPI<br>Section Ch, Week 8928<br>Derwent Publications Ltd., London, GB;<br>Class A23, AN 89-202165<br>& JP-A-01 139 813 ( KURARAY KK) , 1.Juni 1989<br>* Zusammenfassung *<br>--- | | |
| A | CHEMICAL ABSTRACTS, vol. 90, no. 16,<br>16.April 1979<br>Columbus, Ohio, US;<br>abstract no. 122950p,<br>YAMAMOTO ET AL. 'Colored aromatic polyamide fibers'<br>Seite 67; Spalte 2;<br>* Zusammenfassung *<br>& JP-A-53 126 313 (TEIJIN LTD.) 4.November 1978<br>--- | | |
| A | DATABASE WPI<br>Section Ch, Week 7550<br>Derwent Publications Ltd., London, GB;<br>Class A23, AN 75-82079W<br>& JP-A-50 010 845 ( MITSUBISHI RAYON KK) ,<br>4.Februar 1975<br>* Zusammenfassung *<br>---<br>-/-- | | |

**RECHERCHIERTE SACHGEBIETE (Int.Cl.6)**

D01F
C08J
C08K
C08L

Der vorliegende Recherchenbericht wurde für alle Patentansprüche erstellt

| Recherchenort | Abschlußdatum der Recherche | Prüfer |
|---|---|---|
| DEN HAAG | 18.April 1995 | Tarrida Torrell, J |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | DATABASE WPI<br>Section Ch, Week 7506<br>Derwent Publications Ltd., London, GB;<br>Class A23, AN 75-09967W<br>& JP-A-49 115 148 ( MITSUBISHI RAYON CO LTD) , 2.November 1974<br>* Zusammenfassung *<br>----- | | |
| | | | **RECHERCHIERTE SACHGEBIETE (Int.Cl.6)** |

Der vorliegende Recherchenbericht wurde für alle Patentansprüche erstellt

| Recherchenort | Abschlußdatum der Recherche | Prüfer |
|---|---|---|
| DEN HAAG | 18.April 1995 | Tarrida Torrell, J |

EPO FORM 1503 03.82 (P04C03)